# EUROPEAN PATENT SPECIFICATION

(11) **EP 4 314 522 B1**
(45) Date of publication and mention of the grant of the patent: **18.12.2024**
(21) Application number: 21716623.0
(22) Date of filing: 26.03.2021
(51) Int. Cl.: F02F 1/24

(54) **A CYLINDER HEAD FOR A LEAN-BURN GASOLINE ENGINE**
ZYLINDERKOPF FÜR EINE BRENNKRAFTMASCHINE MIT MAGERGEMISCHVERBRENNUNG
CULASSE DE MOTEUR À ESSENCE À MÉLANGE PAUVRE

(43) Date of publication of application: 07.02.2024
(73) Proprietor: Jaguar Land Rover Limited, Coventry, Warwickshire CV3 4LF (GB)
(72) Inventor: JOHNSON, Jack, Coventry Warwickshire CV3 4lf (GB); MCWILLIAM, Lyn, Coventry Warwickshire CV3 4lf (GB)
(74) Representative: Jaguar Land Rover Patents Department
(86) International application number: PCT/EP2021/057917
(87) International publication number: WO 2022/199833

(56) References cited:
- EP-A1- 2 423 483
- DE-B3- 102017 216 996
- FR-A1- 2 950 932

## Description

### TECHNICAL FIELD

The present disclosure relates to a cylinder head for a lean-burn gasoline engine, to a lean-burn gasoline engine and to a vehicle with such an engine.

### BACKGROUND

In classic internal combustion engines, gasoline burns best when it is mixed with air in proportions of around 14.7:1 (lambda = 1) depending on the particular type of fuel. Most modern gasoline engines used in vehicles tend to operate at or near this so-called stoichiometric point for most of the time. Ideally, when burning fuel in an engine, only carbon dioxide (CO2) and water (H2O) are produced. In practice, the exhaust gas of an internal combustion engine also comprises significant amounts of carbon monoxide (CO), nitrogen oxides (NOₓ) and unburned hydrocarbons.

It is desirable to increase fuel efficiency and reduce unwanted emissions. One possible route for increasing fuel efficiency is to burn the fuel with an excess of air. Burning fuel in such an oxygen-rich environment is usually called lean-burning. Typical lean-burn engines may mix air and fuel in proportions of, for example, 20:1 (lambda > 1.3) or even 30:1 (lambda > 2).

Advantages of lean-burn engines include, for example, that they produce lower levels of CO2 and hydrocarbon emissions by better combustion control and more complete fuel burning inside the engine cylinders. The engines designed for lean burning can employ higher compression ratios and thus provide better performance, more efficient fuel use and lower exhaust hydrocarbon emissions than conventional gasoline engines. Additionally, lean-burn modes help to reduce throttling losses, which originate from the extra work that is required for pumping air through a partially closed throttle. When using more air to burn the fuel, the throttle can be kept more open when the demand for engine power is reduced.

Lean burning of fuel does, however, also come with some technical challenges that have to be overcome for providing an engine that is suitable and optimised for efficiently burning hydrocarbons in an oxygen-rich environment. For example, if the mixture is too lean, the engine may fail to combust. Especially at low loads and engine speeds, reduced flammability may affect the stability of the combustion process and introduce problems with engine knock. Further, a lower fuel concentration leads to less output. Because of such disadvantages, lean burn is currently only used for part of the engine map and most lean-burning modern engines, for example, tend to cruise and coast at or near the stoichiometric point.

In order to enable the lean burning of fuel over a larger portion of the engine map, the engine needs to be designed in such a way to enable a large airflow into the combustion chamber and to ensure a reliable combustion process that will effectively burn all fuel, despite the oxygen rich conditions.

It is an aim of the present invention to provide an improved lean-burn gasoline engine.

EP 2 423 483 A1 dislcoses a method of machining a cylinder head.

DE 10 2017 216996 B3 discloses a cylinder head with several pairs of facets.

### SUMMARY OF THE INVENTION

Aspects and embodiments of the invention provide a cylinder head for an engine, an engine, and a vehicle with such an engine. The engine may be suitable for use with fuels including gasoline, diesel, hydrogen, LPG or any other suitable combustible fuel. The engine may be a lean-burn engine.

According to an aspect of the present invention there is provided a method of machining a combustion chamber roof surface in a cylinder head for an engine, wherein the machined cylinder head comprises:
a substantially planar gasket interface surface; and
a combustion chamber extending into the cylinder head away from the gasket interface surface, wherein the combustion chamber roof surface intersects the gasket interface surface to define a combustion chamber opening,
the method comprising:
   using a first cutter to machine a first pair of facets of the combustion chamber roof surface, wherein a first one of the first pair of facets is located at least partially between a pair of air inlet openings in the combustion chamber roof located on an air inlet side of the combustion chamber, and a second one of the first pair of facets is located at least partially between a pair of exhaust outlet openings in the combustion chamber roof located on an exhaust outlet side of the combustion chamber;
   using a second cutter to machine a second pair of facets of the combustion chamber roof surface, wherein the second pair of facets are located between the pair of air inlet openings and the pair of exhaust outlet openings such that each one of the second pair of facets extends between the air inlet side of the combustion chamber and the exhaust outlet side of the combustion chamber; and
using the second cutter to machine a third pair of facets of the combustion chamber roof surface, wherein a first one of the third pair of facets is located between a first one of the air inlet openings and a first one of the exhaust outlet openings, and a second one of the third pair of facets is located between a second one of the air inlet openings and a second one of the exhaust outlet openings.

This method is advantageous as the second and third pairs of machined facets are machined by the same cutter in the manufacturing process. This reduces the complexity of the manufacturing process and improves manufacturing efficiency.

Optionally the first pair of facets are machined before the second pair of facets.

The second pair of facets are optionally machined before the third pair of facets.

The method may comprise using the second cutter to machine a fourth pair of facets of the combustion chamber roof surface, wherein a first one of the fourth pair of facets is located between the first one of the air inlet openings and the first one of the exhaust outlet openings, and a second one of the fourth pair of facets is located between the second one of the air inlet openings and the second one of the exhaust outlet openings.

Again, this method is advantageous as the fourth pair of machined facets are machined by the same cutter used for the second and third pairs of facets which reduces the complexity of the manufacturing process and improves efficiency.

In one example the method comprises using the second cutter to machine a fifth pair of facets of the combustion chamber roof surface, wherein a first one of the fifth pair of facets is located between the first one of the air inlet openings and the first one of the exhaust outlet openings, and a second one of the fifth pair of facets is located between the second one of the air inlet openings and the second one of the exhaust outlet openings. As above, this method is advantageous as the fifth pair of machined facets are machined by the same cutter used for the second to fourth pairs of cuts to reduce complexity and improve efficiency.

Optionally the method comprises using a third cutter to machine a sixth pair of facets of the combustion chamber roof surface, wherein a first one of the sixth pair of facets is located at least partially between the pair of air inlet openings, and a second one of the sixth pair of facets is located at least partially between the pair of exhaust outlet openings, wherein each one of the sixth pair of facets intersect the gasket interface surface to define a first pair of opposing sections of the combustion chamber opening.

The fourth pair of facets are optionally machined after the third pair of facets.

The fifth pair of facets may be machined after the fourth pair of facets.

In one example the sixth pair of facets are machined after the fifth pair of facets.

Optionally the third pair of facets comprise a pair of flat surfaces. This helps to open up the combustion chamber and remove material between the inlet side and the outlet side which may otherwise hinder flow from one side of the combustion chamber to the other.

The first one of the third pair of facets is optionally substantially parallel to the plane of the first one of the exhaust outlet openings, and the second one of the third pair of facets is substantially parallel to the plane of the second one of the exhaust outlet openings. This configuration is beneficial for efficient flow across the combustion chamber from one side to the other.

Each one of the third pair of facets may be located between curved surfaces which boarder the air inlet openings and the exhaust outlet openings respectively.

In one example the second pair of facets comprise opposing curved surfaces to help encourage "omega swirl" of the inflowing air as it moves from the air inlet openings towards the exhaust outlet openings and then back towards the air inlet openings; and from the centre of the combustion chamber towards the edges of the combustion chamber.

Optionally the intersection of the first pair of facets and the gasket interface surface define a second pair of opposing sections of the combustion chamber opening.

The intersection of the sixth pair of facets and the gasket interface surface optionally define a second pair of opposing sections of the combustion chamber opening.

In another aspect the present invention provides a cylinder head comprising a combustion chamber roof surface machined as described above.

In a further aspect the present invention provides an engine comprising a cylinder head as described above.

In a still further aspect the present invention provides a vehicle comprising an engine as described above.

### BRIEF DESCRIPTION OF THE DRAWINGS

One or more embodiments of the invention will now be described, by way of example only, with reference to the accompanying drawings, in which:
Figure 1 shows a vehicle in which the invention may be used;
Figure 2 shows a cross section of portion of an engine block and cylinder head with a piston shown near bottom dead centre;
Figure 3 shows a plan view of the underside of the cylinder head of Figure 2;
Figure 4 shows a magnified view of the cross section of Figure 2;
Figure 5 shows a plan view of the underside of the cylinder head in the as cast condition;
Figure 6a shows a plan view of the underside of the cylinder head after a first machining process has been carried out;
Figure 6b shows a plan view of the underside of the cylinder head highlighting the facets cut by the first machining process;
Figure 6c shows a sectional view of the cylinder head highlighting the facets cut by the first machining process;
Figure 6d shows the volume envelope traversed by the cutter in the first machining process;
Figure 7a shows a plan view of the underside of the cylinder head after a second machining process has been carried out;
Figure 7b shows a plan view of the underside of the cylinder head highlighting the facets cut by the second machining process;
Figure 7c shows a sectional view of the cylinder head highlighting the facets cut by the second machining process;
Figure 7d shows the volume envelopes traversed by the cutter in the second machining process;
Figure 8a shows a plan view of the underside of the cylinder head after a third machining process has been carried out;
Figure 8b shows a plan view of the underside of the cylinder head highlighting the facets cut by the third machining process;
Figure 8c shows a sectional view of the cylinder head highlighting the facets cut by the third machining process;
Figure 8d shows the volume envelopes traversed by the cutter in the third machining process;
Figure 9a shows a plan view of the underside of the cylinder head after a fourth machining process has been carried out;
Figure 9b shows a plan view of the underside of the cylinder head highlighting the facets cut by the fourth machining process;
Figure 9c shows a sectional view of the cylinder head highlighting the facets cut by the fourth machining process;
Figure 9d shows the volume envelopes traversed by the cutter in the fourth machining process;
Figure 10a shows a plan view of the underside of the cylinder head after a fifth machining process has been carried out;
Figure 10b shows a plan view of the underside of the cylinder head highlighting the facets cut by the fifth machining process;
Figure 10c shows a sectional view of the cylinder head highlighting the facets cut by the fifth machining process;
Figure 10d shows the volume envelopes traversed by the cutter in the fifth machining process;
Figure 11a shows a plan view of the underside of the cylinder head after a sixth machining process has been carried out;
Figure 11b shows a plan view of the underside of the cylinder head highlighting the facets cut by the sixth machining process;
Figure 11c shows a sectional view of the cylinder head highlighting the facets cut by the sixth machining process;
Figure 11d shows the volume envelope traversed by the cutter in the sixth machining process;
Figure 12 shows a plan view of the underside of the cylinder head after a seventh and eighth machining process has been carried out;
Figure 13 shows the volume envelopes traversed by the cutters in the first to the eighth machining processes superimposed on one another; and
Figure 14 shows the volume envelopes traversed by the cutters in the first to the sixth machining processes in a flow diagram.

### DETAILED DESCRIPTION

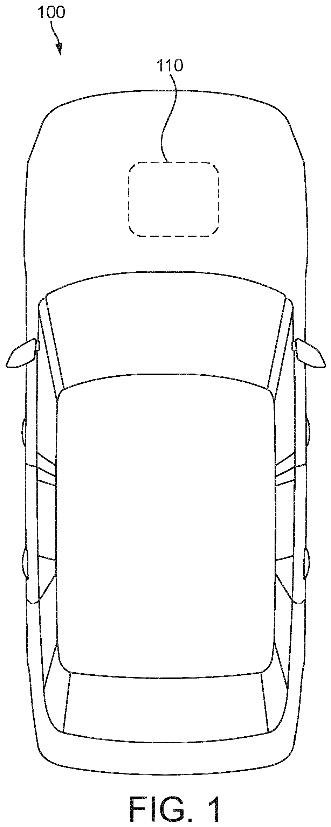

Figure 1 shows a vehicle 100 in which the invention may be used. In this example, the vehicle 100 is a car, but the invention is equally applicable to other vehicles driven by a lean-burn gasoline engine 110. In this vehicle 100, the lean-burn gasoline engine 110 is positioned in the front and coupled to a drivetrain to drive the front and/or rear wheels of the vehicle 100. The energy needed for driving the vehicle 100 is provided by burning fuel in the engine's cylinders and let the cylinder pistons drive a crankshaft that is mechanically connected to the vehicle's drivetrain.

Compared to classic internal combustion engines, the lean-burn engine 110 of this vehicle 100 burns the fuel with an excess of air in the air-fuel mixture. Typical lean-burn engines may mix air and fuel in proportions of, for example, 20:1 (lambda > 1.3) or even 30:1 (lambda > 2). Advantages of lean-burn engines include more efficient fuel use and lower exhaust hydrocarbon emissions than conventional gasoline engines.

In order to enable the lean burning of fuel over a large portion of the engine map, the engine 110 is designed in such a way to enable a large air flow into the combustion chamber and a good mixing with the relatively small amount of fuel that is to be burnt to ensure a reliable combustion process that will effectively burn all fuel, despite the oxygen rich conditions.

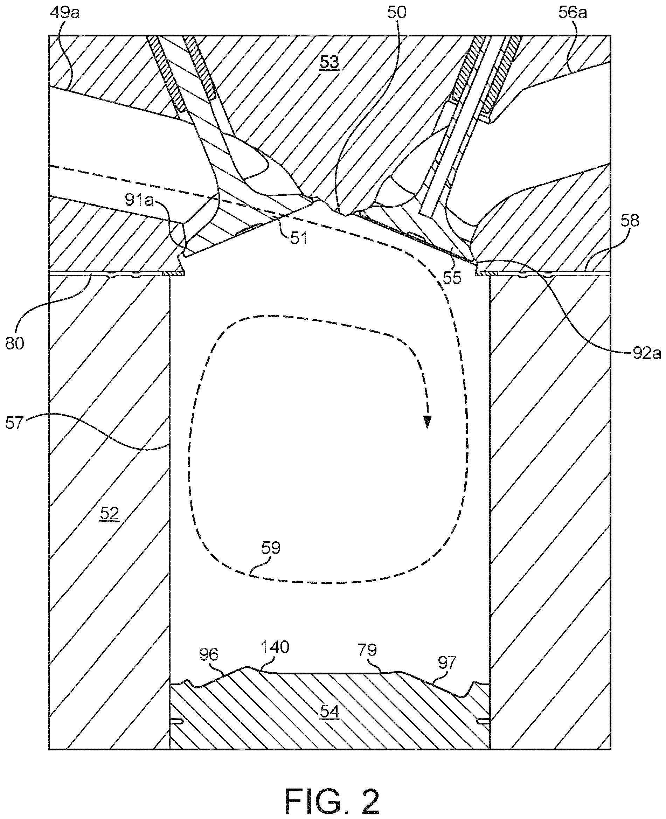

Figure 2 shows a cross section of a portion of an engine block 52 and a cylinder head 53 of the lean burn engine 110. The engine block 52 comprises a cylinder 57 which houses a piston 54 shown near bottom dead centre (BDC) in Figure 2. The cylinder head 53 comprises a combustion chamber 50 which extends into the cylinder head 53 away from a gasket interface surface 58, which is substantially planar. A head gasket 80 is located between the engine block 52 and cylinder head 53.

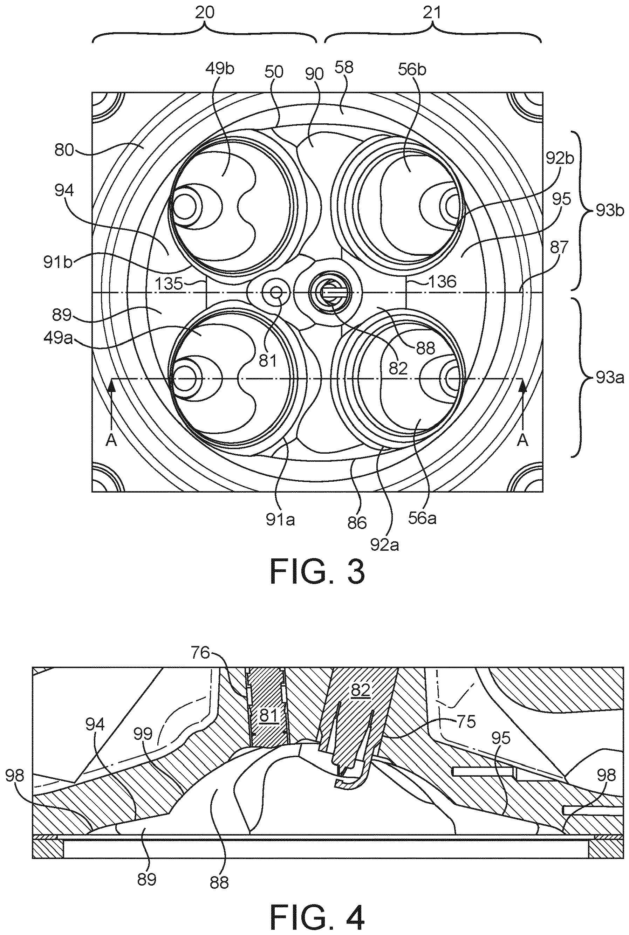

Referring additionally to Figure 3, a pair of air inlets 49a, 49b are located on an air inlet side 20 of the combustion chamber 50. The air inlets 49a, 49b provide a path for a flow of air to the combustion chamber 50 in use. A pair of exhaust outlets 56a, 56b are located on an exhaust outlet side 21 of the combustion chamber 50. The exhaust outlets 56a, 56b provide an exhaust path for the combustion products exiting the combustion chamber 50 in use. The air inlets 49a, 49b connect to respective air inlet openings 91a, 91b located in the roof surface 90 on the air inlet side 20 of the combustion chamber 50, and the exhaust outlets 56a, 56b connect to respective exhaust outlet openings 92a, 92b located in the roof surface 90 on the exhaust outlet side 21 of the combustion chamber 50. The first air inlet opening 91a and the first exhaust outlet opening 92a are located on a first side 93a of the combustion chamber 50, and the second air inlet opening 91b and the second exhaust outlet opening 92b are located on a second side 93b of the combustion chamber 50. The first 93a and second 93b sides of the combustion chamber 50 are located on either side of a plane of symmetry 87 of the combustion chamber 50. The cross section of Figure 2 is taken along section A-A which passes through the first air inlet opening 91a and the first exhaust outlet opening 92a on the first side 93a of the combustion chamber 50.

Referring once again to Figure 2, an inlet valve 51 controls the opening and closing of the first air inlet opening 91a, and an exhaust valve 55 controls the opening and closing of the first exhaust outlet opening 92a. An equivalent inlet valve (not shown) controls the opening and closing of the second air inlet opening 91b, and an equivalent exhaust valve (not shown) controls the opening and closing of the second exhaust outlet opening 92b. The inlet valve 51 and the exhaust valve 55 are shown in the closed position in Figure 2.

A dotted line provides a simplified 2D representation of the preferred air flow path 59 into and through the combustion chamber 50 and cylinder 57 during the intake stroke. As noted above, the inlet valve 51 is shown in the closed position in Figure 2. The air flow path 59 is not possible with the inlet valve 51 in the closed position as shown. Nonetheless, the preferred air flow path 59 is shown for the purpose of illustration.

With the design of this embodiment, it is possible to create a tumble motion of the incoming air, first along the roof 90 of the combustion chamber 50 towards the opposite wall of the cylinder 57, under the outlet valves 55 that close off the exhaust outlet openings 92a, 92b, and then down along that opposite wall of the cylinder 57, back over the top surface of the piston 54 and up along the other wall of the cylinder 57 in the direction of the inlet valves 51 again. This tumble is preferably kept in motion during the full intake stroke and at least a portion of the compression stroke of the piston 54 moving through the cylinder 57. The thus produced tumble helps to obtain an optimal distribution of air and fuel inside the cylinder 57 and combustion chamber 50 that can then break down in the latter stages of the compression stroke into turbulence to facilitate the subsequent combustion process. Wherein, in this context, "turbulence" refers to a flow state having chaotic changes in velocity and pressure and no necessarily clear flow directions as is well known in the art.

The piston 54 comprises a working surface 79 which has a central scooped portion 140 and outer sloped portions 96, 97. The outer sloped portions 96, 97 of the working surface 79 conform to the shape of sloped surface portions 94, 95 of the combustion chamber roof surface 90.

Figure 3 shows a plan view of the underside of the cylinder head 53 and head gasket 80 which shows the machined roof surface 90 of the combustion chamber 50. The combustion chamber roof surface 90 extends into the cylinder head 53 away from the gasket interface surface 58. The intersection between the combustion chamber roof surface 90 and the gasket interface surface 58 comprises a combustion chamber opening 86 in the gasket interface surface 58. The pair of air inlet openings 91a, 91b, and the pair of exhaust outlet openings 92a, 92b are formed in the combustion chamber roof surface 90. For the avoidance of doubt, the internal surfaces of the air inlets 49a, 49b, and exhaust outlets 56a, 56b seen in Figure 3 do not form part of the combustion chamber roof surface 90.

As best shown in Figure 4, a central domed surface portion 99 of the combustion chamber roof surface 90 defines a central domed portion 88 of the combustion chamber 50. In this embodiment the central domed surface portion 99 is elongate such that it extends from one side of the combustion chamber 50 to the other in a direction substantially perpendicular to the plane of symmetry 87. That is to say, the central domed surface portion 99 extends between the first side 93a and the second side 93b of the combustion chamber 50. Note that the central domed surface portion 99 of the combustion chamber roof surface 90 is not a single smooth surface, but rather is a surface made up of a plurality of facets made by different machine cutters during manufacture as will be described in detail below.

A spark plug seat 75 and a fuel injector seat 76 are located in the cylinder head 53. Both the spark plug seat 75 and fuel injector seat 76 open into the domed surface portion 99 of the combustion chamber roof surface 90. The spark plug seat 75 opens into roof surface 90 at the approximate centre of the combustion chamber 50, and the fuel injector seat 76 opens into the roof surface 90 substantially adjacent to the spark plug seat opening further towards the air inlet openings 91a, 91b than the spark plug seat opening. Both the spark plug seat opening and the fuel injector seat opening are located substantially on the plane of symmetry 87 of the combustion chamber 50.

The spark plug seat 75 is configured so that the tip of the spark plug 82 is supported towards the centre of the central domed portion 88 substantially on the plane of symmetry 87 of the combustion chamber 50. The fuel injector seat 76 is configured to support the tip of the fuel injector 81 proximate the combustion chamber roof surface 90 substantially in line with the tip of the spark plug 82.

Referring once again to Figure 3, broadly speaking the combustion chamber 50 has two zones, a central domed portion 88 and an outer sloped portion 89. The central domed portion 88 is bounded by the central domed roof surface portion 99 of the combustion chamber roof surface 90, and the outer sloped portion 89 is bounded by two sloped surface portions 94, 95 of the combustion chamber roof surface 90. In this embodiment the sloped surface portions 94, 95 each have a shape which conforms to the surface of a single cone. That is to say, the sloped surface portions 94, 95 each form part of the surface of the same conical shape. Thus, the cross sections of the sloped surface portions 94, 95 are straight along the plane of symmetry 87 of the combustion chamber 50. As best shown in Figure 4, the combustion chamber roof surface 90 between the sloped surface portions 94, 95 and the combustion chamber opening 86 comprises curved portions 98 which extend from the sloped surface portions 94, 95 to the combustion chamber opening 86.

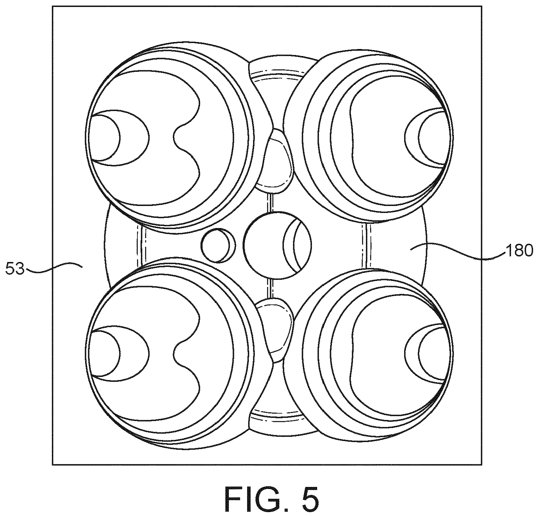

The machining steps taken to achieve the finished profile of the combustion chamber roof surface 90 will now be described with reference to Figures 5 to 14. Figure 5 shows a plan view of the underside of the cylinder head 53 in the "as cast" condition. That is to say that the profile of the underside of the cylinder head is entirely determined by the casting process and no machining process has yet been undertaken. As shown in Figure 5, holes to form the air inlets 49a, 49b and exhaust outlets 56a, 56b are formed in the casting process. In addition, holes to form the spark plug seat 75 and fuel injector seat 76 are formed during the casting process. A recess 180 is formed in the underside of the cylinder head 53 in the casting process. However, the recess 180 does not comprise any of the features of the finished combustion chamber roof surface 90.

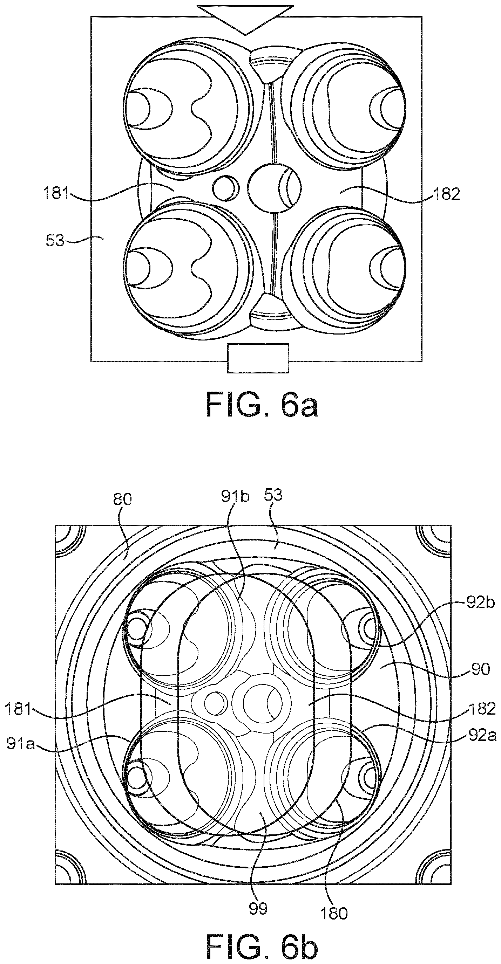

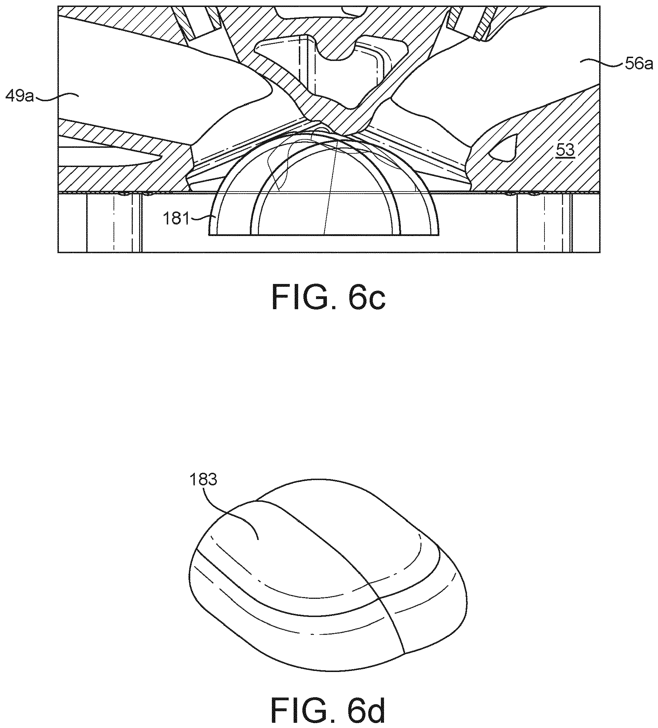

Figure 6a shows a plan view of the underside of the cylinder head 53 after a first machining process has taken place. In the first machining process material is removed from the cylinder head 53 by a ball nose cutter to form the first cuts of the central domed portion 99 of the combustion chamber roof surface 90. The first machining process cuts surfaces 181, 182. Figure 6d shows the envelope 183 traced by the ball nose cutter during the first machining process. The shadow of the envelope 183 is also shown in plan in Figure 6b and in side view in Figure 6c.

Figure 6b shows a plan view of the completed combustion chamber roof surface 90. Here it can be seen that after all of the machining processes have been completed, only small portions of the first machining process cut surfaces 181, 182 remain between the air inlet openings 91a, 91b and the exhaust outlet openings 92a, 92b. These remaining portions 181, 182 of the first machining process cuts form part of the central domed surface portion 99 of the combustion chamber roof 90. The surfaces 181, 182 may be described as a first pair of machined facets comprising curved surfaces.

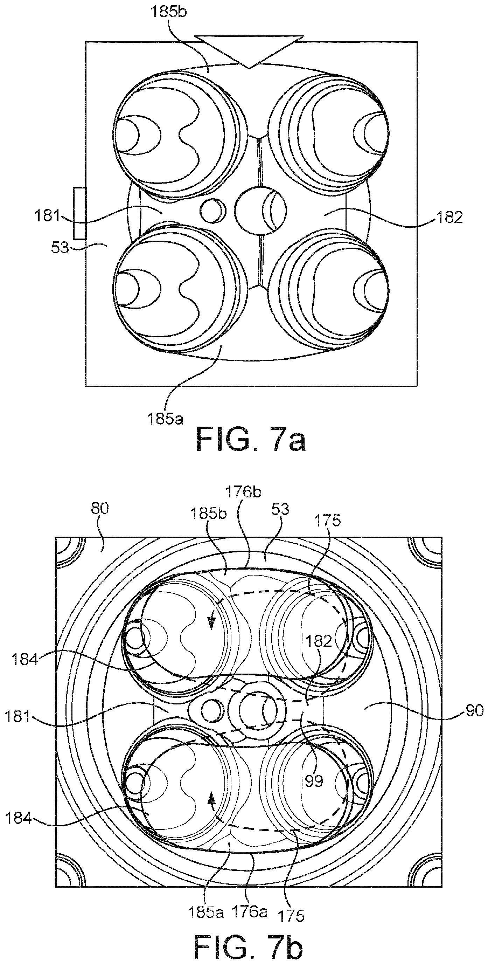

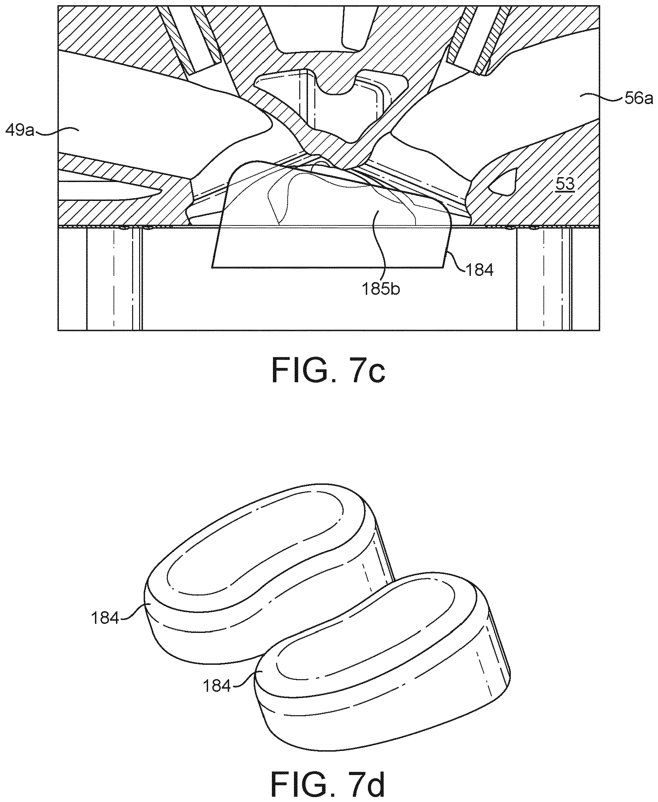

Figure 7a shows a plan view of the underside of the cylinder head 53 after a second machining process has taken place. In the second machining process material is removed from the cylinder head 53 by a radiused cutter to form the second cuts of the central domed portion 99 of the combustion chamber roof surface 90. The second machining process cuts surfaces 185a, 185b. Figure 7d shows the envelope 184 traced by the radiused cutter during the second machining process. The shadow of the envelope 184 is also shown in plan in Figure 7b and in side view in Figure 7c.

Figure 7b shows a plan view of the completed combustion chamber roof surface 90. Here it can be seen that after all of the machining processes have been completed, only the end portions of the second machining process cut surfaces 185a, 185b remain at either end of the central domed portion 99 of the combustion chamber roof surface 90. These end portions 185a, 185b of the second machining process cuts form part of the central domed surface portion 99 of the combustion chamber roof 90. The end portions 185a, 185b may be described as a second pair of machined facets comprising opposing curved surfaces.

The cuts made by the radiused cutter in the second machining process are beneficial as they form curved wall portions of the central domed portion 99 of the combustion chamber roof 90. This encourages an "omega swirl" flow path as the inflowing air moves from the air inlet openings 91a ,91b towards the exhaust outlet openings 92a, 92b and then back towards the air inlet openings 91a, 91b; and from the centre of the chamber 50 towards the edges of the chamber 50. The "omega swirl" flow path is illustrated in Figure 7b by the dotted lines 175. It should be noted that the "omega swirl" flow pattern 175 is superimposed with the "tumble" flow pattern (illustrated by dotted line 59 in Figure 2) in the operating engine 110.

The cut surfaces 185a, 185b made by the radiused cutter in the second machining process form the characteristic curved portions 176a, 176b of the combustion chamber opening 86 located between the air inlet openings 91a, 91b and the exhaust outlet openings 92a, 92b respectively. These curved portions 176a, 176b may be described as a second pair of opposed curved sections of the combustion chamber opening 86.

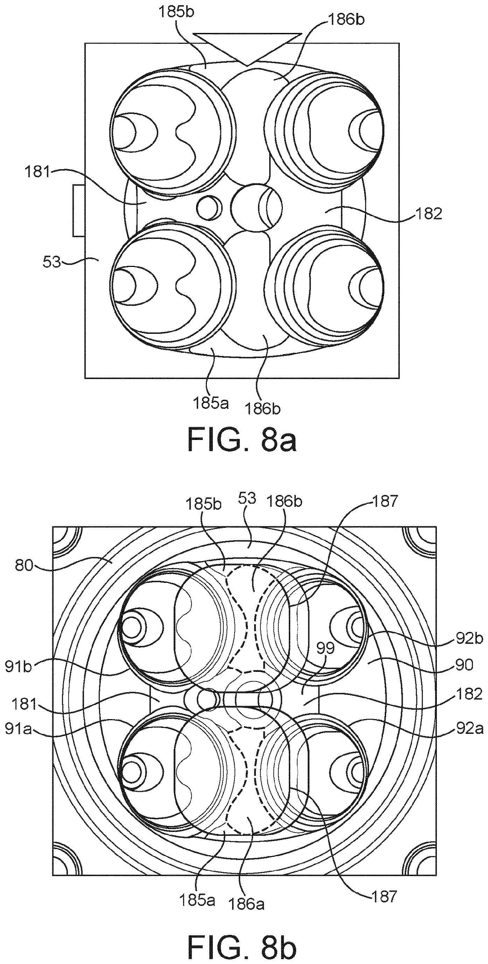

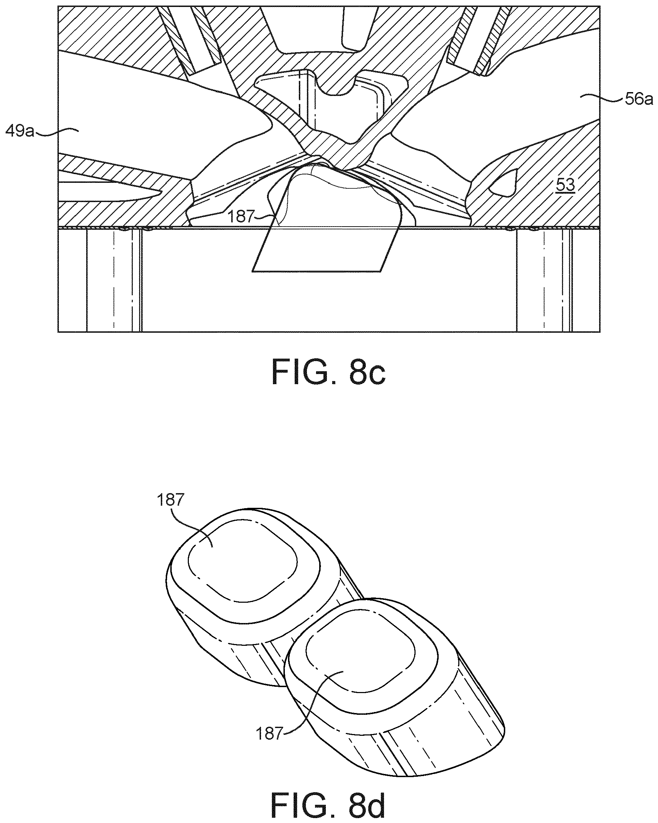

Figure 8a shows a plan view of the underside of the cylinder head 53 after a third machining process has taken place. In the third machining process material is removed from the cylinder head 53 by the same radiused cutter as that used to form the second cuts 185a, 185b. The third cuts form part of the central domed portion 99 of the combustion chamber roof surface 90. The third machining process cuts surfaces 186a, 186b. Figure 8d shows the envelope 187 traced by the radiused cutter during the third machining process. The shadow of the envelope 187 is also shown in plan in Figure 8b and in side view in Figure 8c.

Figure 8b shows a plan view of the completed combustion chamber roof surface 90. Here it can be seen that after all of the machining processes have been completed, portions of the third machining process cut surfaces 186a, 186b remain between the air inlet openings and the exhaust outlet openings. These remaining portions 186a, 186b of the third machining process cuts form part of the central domed surface portion 99 of the combustion chamber roof 90. The surfaces 186a, 186b may be described as a third pair of machined facets comprising substantially flat surfaces.

With particular reference to Figure 8c, it can be seen that the envelope 187 traced by the radiused cutter during the third machining process has a substantially flat top profile that is substantially parallel to the plane of the exhaust outlet opening 92a. As a result of this, the cut surfaces 186a, 186b formed by the third machining process are substantially flat in the region of the third cut surfaces 186a, 186b located between the air inlet openings and the exhaust outlet openings. Only the air inlet opening 91a and the exhaust outlet opening 92a are shown in Figure 8c. The substantially flat cut made by the radiused cutter in the third machining process are beneficial as they remove material between the air inlet openings 91a, 91b and the exhaust outlet openings 92a, 92b so that inflowing air may flow across the top of the combustion chamber 50 from the air inlet openings 91a ,91b towards the exhaust outlet openings 92a, 92b without interference. By substantially matching the flat portions of the machined surfaces 186a, 186b located between the air inlet openings and the exhaust outlet openings to the plane of the exhaust outlet openings 92a, 92b, uninterrupted flow between the air inlet openings and the exhaust outlet openings can be maximised. This is beneficial to the creation of a tumble flow pattern in the cylinder 57 during the intake stroke of the piston 54.

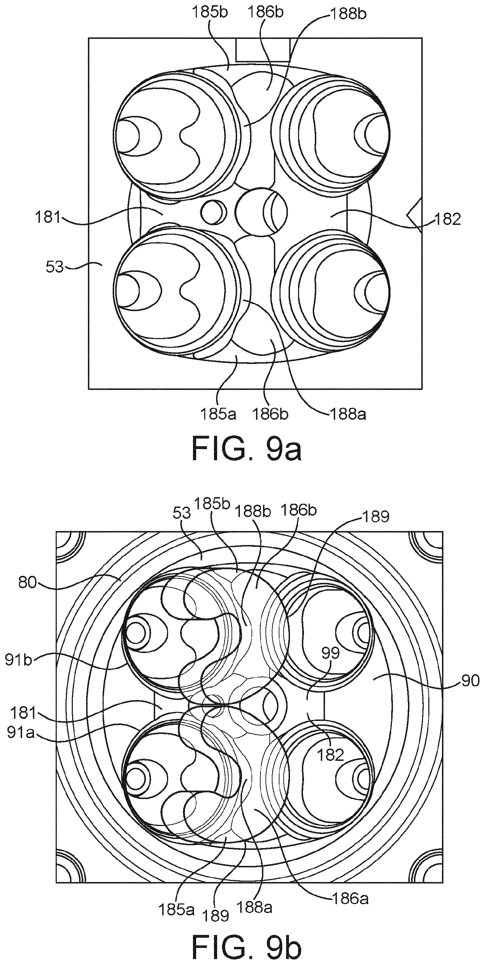

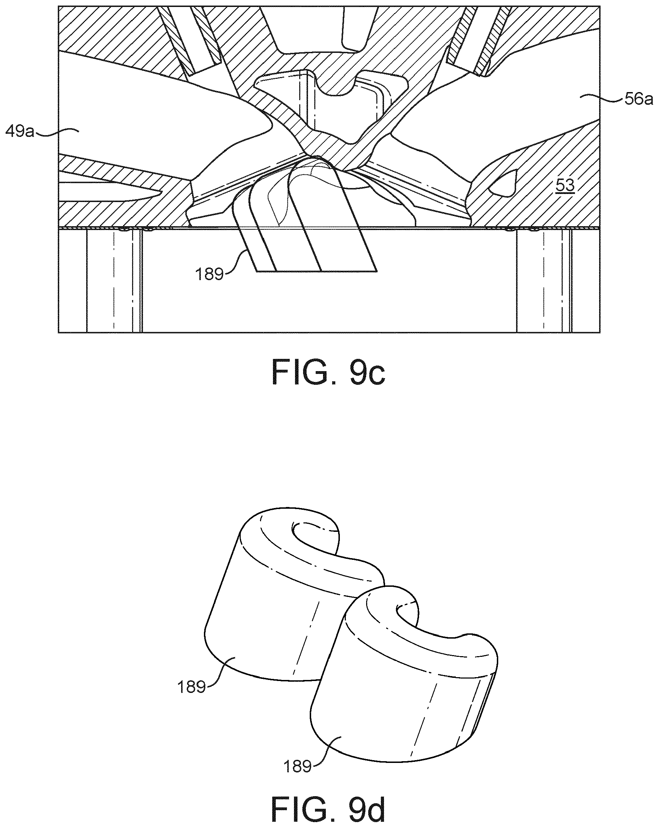

Figure 9a shows a plan view of the underside of the cylinder head 53 after a fourth machining process has taken place. In the fourth machining process material is removed from the cylinder head 53 by the same radiused cutter as that used to form the second cuts 185a, 185b and the third cuts 186a, 186b. The fourth cuts form part of the central domed portion 99 of the combustion chamber roof surface 90. The fourth machining process cuts surfaces 188a, 188b. Figure 9d shows the envelope 189 traced by the radiused cutter during the fourth machining process. The shadow of the envelope 189 is also shown in plan in Figure 9b and in side view in Figure 9c.

Figure 9b shows a plan view of the completed combustion chamber roof surface 90. Here it can be seen that the fourth machining process cut surfaces 188a, 188b are located adjacent the air inlet openings 91a, 91b. The fourth machining process cuts 188a, 188b form part of the central domed surface portion 99 of the combustion chamber roof 90. The surfaces 188a, 188b may be described as a fourth pair of machined facets comprising curved surfaces.

The cuts made by the radiused cutter in the fourth machining process are beneficial as they remove material between the air inlet openings 91a, 91b and the exhaust outlet openings 92a, 92b so that inflowing air may flow across the top of the combustion chamber 50 from the air inlet openings 91a ,91b towards the exhaust outlet openings 92a, 92b without interference. In particular, the cuts 188a, 188b made in the fourth machining process help to open up the roof 90 of the combustion chamber to promote tumble flow.

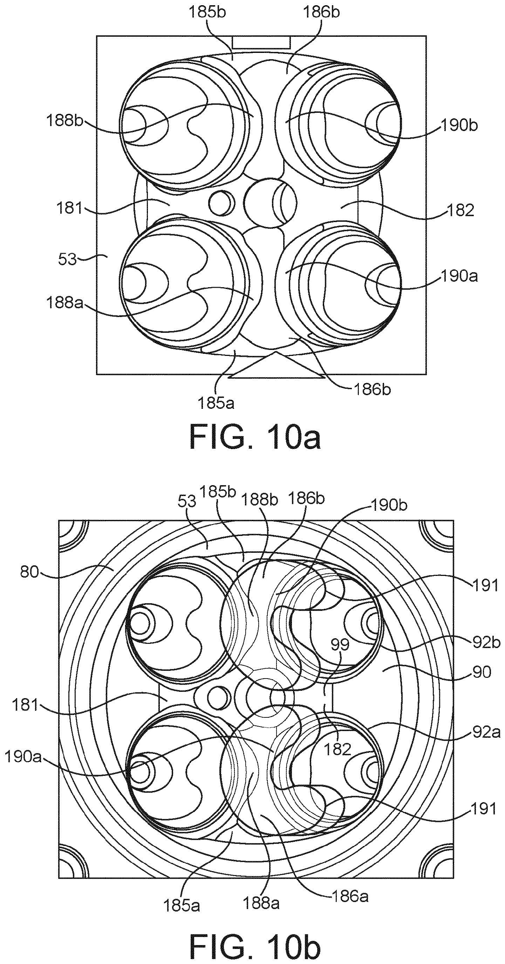

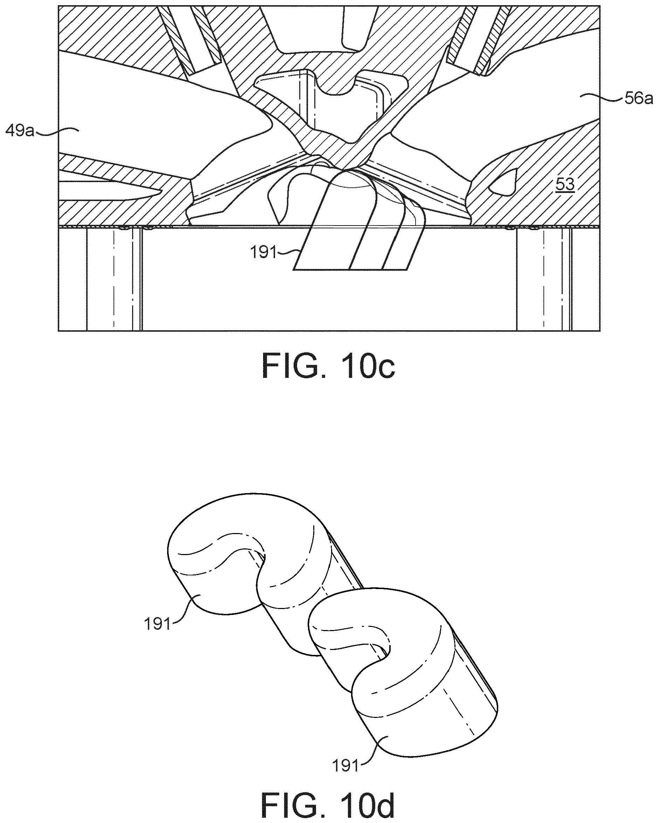

Figure 10a shows a plan view of the underside of the cylinder head 53 after a fifth machining process has taken place. In the fifth machining process material is removed from the cylinder head 53 by the same radiused cutter as that used to form the second cuts 185a, 185b, the third cuts 186a, 186b and the fourth cuts 188a, 188b. The fifth cuts form part of the central domed portion 99 of the combustion chamber roof surface 90. The fifth machining process cuts surfaces 190a, 190b. Figure 10d shows the envelope 191 traced by the radiused cutter during the fifth machining process. The shadow of the envelope 191 is also shown in plan in Figure 10b and in side view in Figure 10c.

Figure 10b shows a plan view of the completed combustion chamber roof surface 90. Here it can be seen that the fifth machining process cut surfaces 190a, 190b are located adjacent the exhaust outlet openings 92a, 92b. The fifth machining process cuts 190a, 190b form part of the central domed surface portion 99 of the combustion chamber roof 90. The surfaces 190a, 190b may be described as a fifth pair of machined facets comprising curved surfaces.

The cuts made by the radiused cutter in the fifth machining process are beneficial as they remove material between the air inlet openings 91a, 91b and the exhaust outlet openings 92a, 92b so that inflowing air may flow across the top of the combustion chamber 50 from the air inlet openings 91a ,91b towards the exhaust outlet openings 92a, 92b without interference. In particular, the cuts 190a, 190b made in the fifth machining process help to open up the roof 90 of the combustion chamber to promote tumble flow.

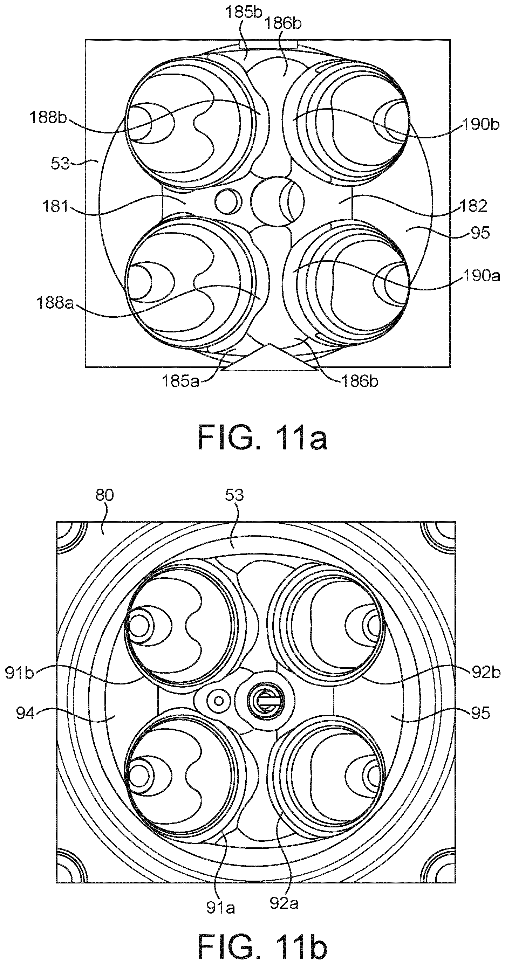

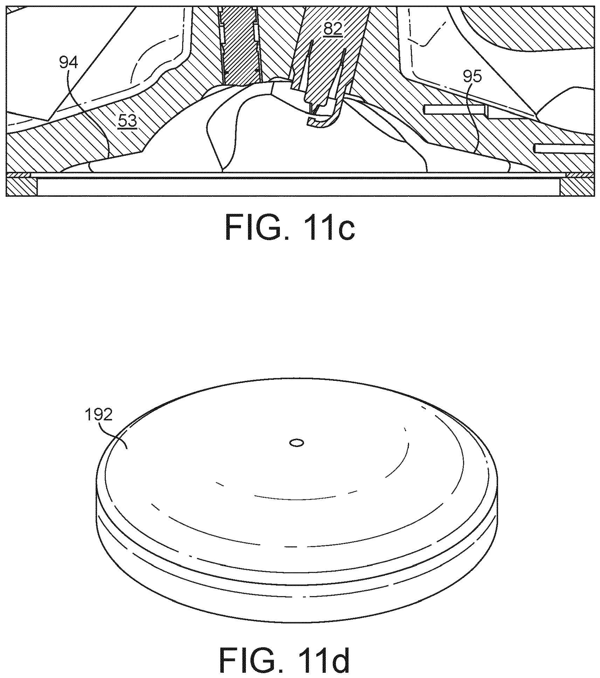

Figure 11a shows a plan view of the underside of the cylinder head 53 after a sixth machining process has taken place. The sixth machining process forms the outer sloped portion 89 of the combustion chamber 50 by cutting sloped surface portions 94, 95. Figure 11d shows the envelope 192 traced by the cutter during the sixth machining process.

Figure 11b shows a plan view of the completed combustion chamber roof surface 90. Here it can be seen that the sloped surfaces 94, 95 are located between the air inlet openings 91a, 91b and the exhaust outlet openings 92a, 92b respectively. The sloped surfaces 94, 95 may be described as a sixth pair of machined facets comprising opposing curved surfaces.

Figure 11c shows a sectional view of the cylinder head 53 along the plane of symmetry 87 of the combustion chamber. Here it can be seen that the sloped surfaces 94, 95 are directed towards the tip of the spark plug 82. This orientation of the sloped surfaces 94, 95 is beneficial as the slope of the sloped surface 94, 95 conform to the sloped surfaces 96, 97 of the piston 54 such that as the piston 54 approaches top dead centre, the air fuel mixture is squeezed out of the sides of the combustion chamber 50 towards the tip of the spark plug 82. This helps to facilitate a more complete combustion of the air fuel mixture.

The outermost edges of the sloped surfaces 94, 95 made by the sixth machining process form curved portions of the combustion chamber opening 86 located between the air inlet openings 91a, 91b and the exhaust outlet openings 92a, 92b respectively. These curved portions may be described as a pair of opposed curved sections of the combustion chamber opening 86.

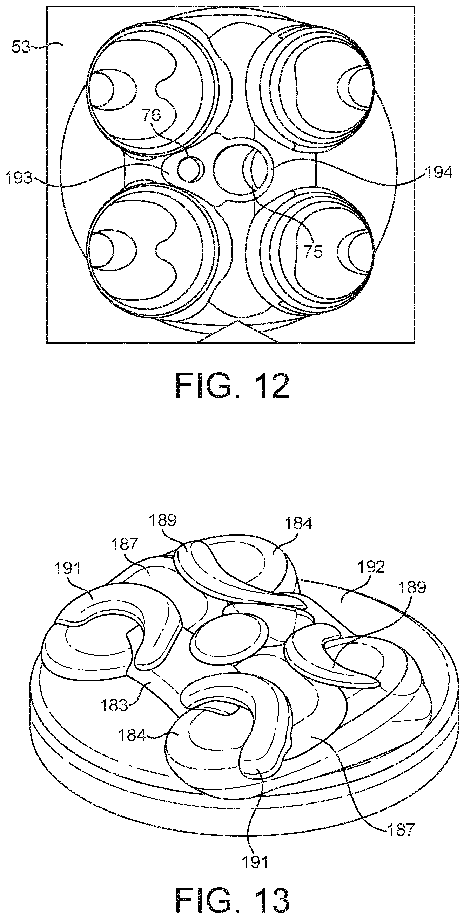

Figure 12 shows a plan view of the underside of the cylinder head 53 after seventh and eighth machining processes have taken place. The seventh machining process forms surface 193 in the vicinity of the fuel injector seat 76, and the eighth machining process forms surface 194 in the vicinity of the spark plug seat 75. Both the seventh and the eighth cuts help to open up the roof 90 of the combustion chamber 50 to allow for better flow and more complete combustion.

Although the spark plug 82 and fuel injector 81 are shown in line along the plane of symmetry 87 of the combustion chamber 50, it will be appreciated that the spark plug 82 and fuel injector 81 may in other embodiments be located sided by side in a plane perpendicular to the plane of symmetry 87 or in any other suitable position.

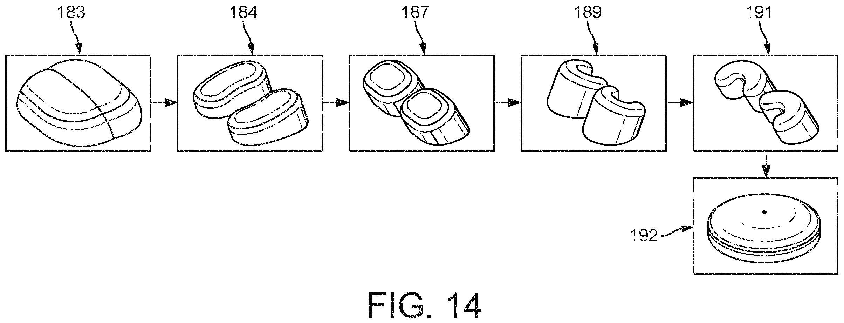

Figure 13 shows the volume envelopes traversed by the cutters in the first to the eighth machining processes superimposed on one another, and Figure 14 shows the volume envelopes traversed by the cutters in the first to the sixth machining processes in a flow chart.

It is envisaged that the order in which the cuts are made may vary from that described above and shown in Figure 14. For example, the cuts 94, 95 made by the sloped surface cutter moving through envelope 192 may be made at the beginning of the machining process rather than near the end. Similarly, the cuts 181, 182 made by the ball nose cutter moving through the envelope 183 may be made towards the end of the machining process rather than at the beginning. In fact, any of the cuts described above may be made in any order. However, it is preferred that the machining processes be ordered as illustrated in Figure 14 as this sequence provides an optimal balance between the amount of material to be removed in any given machining process, and the amount of "fresh air" that a cutter moves through. It is well known in the art that it is desirable for a cutter to continuously remove a small amount of material in a cutting process without biting too deeply into the material as this can cause imperfections in the cut surface and too much load on the cutter. It is also desirable to avoid the cutter repeatedly lifting off and re-contacting the material.

With exception of the "sixth" machining process described above with reference to Figures 11a to 11d - and represented by envelope 192 - the sequence of machining processes from the "first" to the "fifth" is preferably as described above. The "sixth" machining process is preferably made after the "fifth" machining process as described above, or it may preferably be made at the beginning of the machining processes. The "seventh" and "eighth" cuts described above with reference to Figure 12, are preferably the last cuts to be made. However, they may optionally be made at any other suitable position in the machining sequence.

It is beneficial to make all cuts made by the same tool in sequence. For example, the sequence of cuts made by the radiused cutter moving through the envelopes 184, 187, 189, 191. These machining processes may optionally be made in any suitable order. However, the order shown in Figure 14, and described above with reference to Figures 7a to 10d, is preferred because it provides the above described optimal balance between the amount of material to be removed in any given machining process, and the amount of "fresh air" that the cutter moves through.

In the description above, the completed roof surface 90 of the combustion chamber 50 comprises only machined surfaces. In an alternative arrangement, some of the roof surface 90 of the combustion chamber 50 may be "as cast" such that no material is removed from certain areas of the roof of the recess 180.

It will be appreciated that various changes and modifications can be made to the present invention without departing from the scope of the present application.

## Claims

1. A method of machining a combustion chamber roof surface in a cylinder head for a lean-burn gasoline engine, wherein the machined cylinder head comprises:
a substantially planar gasket interface surface; and
a combustion chamber extending into the cylinder head away from the gasket interface surface, wherein the combustion chamber roof surface intersects the gasket interface surface to define a combustion chamber opening,
the method comprising:
using a first cutter to machine a first pair of facets (181, 182) of the combustion chamber roof surface, wherein a first one of the first pair of facets is located at least partially between a pair of air inlet openings in the combustion chamber roof located on an air inlet side of the combustion chamber, and a second one of the first pair of facets is located at least partially between a pair of exhaust outlet openings in the combustion chamber roof located on an exhaust outlet side of the combustion chamber;
using a second cutter to machine a second pair of facets (185a, 185b) of the combustion chamber roof surface, wherein the second pair of facets are located between the pair of air inlet openings and the pair of exhaust outlet openings such that each one of the second pair of facets extends between the air inlet side of the combustion chamber and the exhaust outlet side of the combustion chamber; and
using the second cutter to machine a third pair of facets (186a, 186b) of the combustion chamber roof surface, wherein a first one of the third pair of facets is located between a first one of the air inlet openings and a first one of the exhaust outlet openings, and a second one of the third pair of facets is located between a second one of the air inlet openings and a second one of the exhaust outlet openings.

2. A method as claimed in claim 1, wherein the first pair of facets are machined before the second pair of facets.

3. A method as claimed in claim 1 or claim 2, wherein the second pair of facets are machined before the third pair of facets.

4. A method as claimed in any preceding claim, comprising using the second cutter to machine a fourth pair of facets of the combustion chamber roof surface, wherein a first one of the fourth pair of facets is located between the first one of the air inlet openings and the first one of the exhaust outlet openings, and a second one of the fourth pair of facets is located between the second one of the air inlet openings and the second one of the exhaust outlet openings.

5. A method as claimed in claim 4, comprising using the second cutter to machine a fifth pair of facets of the combustion chamber roof surface, wherein a first one of the fifth pair of facets is located between the first one of the air inlet openings and the first one of the exhaust outlet openings, and a second one of the fifth pair of facets is located between the second one of the air inlet openings and the second one of the exhaust outlet openings.

6. A method as claimed in claim 5, comprising using a third cutter to machine a sixth pair of facets of the combustion chamber roof surface, wherein a first one of the sixth pair of facets is located at least partially between the pair of air inlet openings, and a second one of the sixth pair of facets is located at least partially between the pair of exhaust outlet openings, wherein each one of the sixth pair of facets intersect the gasket interface surface to define a pair of opposing sections of the combustion chamber opening.

7. A method as claimed in claim 4, wherein the fourth pair of facets are machined after the third pair of facets.

8. A method as claimed in claim 5, wherein the fifth pair of facets are machined after the fourth pair of facets.

9. A method as claimed in claim 6, wherein the sixth pair of facets are machined after the fifth pair of facets.

10. A method as claimed in any preceding claim, wherein the third pair of facets comprise a pair of flat surfaces.

11. A method as claimed in claim 10, wherein the first one of the third pair of facets is substantially parallel to the plane of the first one of the exhaust outlet openings, and the second one of the third pair of facets is substantially parallel to the plane of the second one of the exhaust outlet openings, optionally wherein each one of the third pair of facets are located between curved surfaces which boarder the air inlet openings and the exhaust outlet openings respectively.

12. A method as claimed in any preceding claim, wherein the second pair of facets comprise opposing curved surfaces, optionally wherein the intersection of the first pair of facets and the gasket interface surface define a second pair of opposing sections of the combustion chamber opening, optionally wherein the intersection of the sixth pair of facets and the gasket interface surface define a second pair of opposing sections of the combustion chamber opening.

13. A cylinder head comprising a combustion chamber roof surface machined according to any one of claims 1 to 12.

14. A lean-burn gasoline engine comprising a cylinder head as claimed in claim 13.

15. A vehicle comprising a lean-burn gasoline engine according to claim 14.

## Patentansprüche

1. Verfahren zum Bearbeiten einer Brennkammerdachoberfläche in einem Zylinderkopf für einen Magerbenzinmotor, wobei der bearbeitete Zylinderkopf umfasst:
eine im Wesentlichen ebene Dichtungsringgrenzoberfläche; und
eine Brennkammer, die sich in den Zylinderkopf von der Dichtungsringgrenzoberfläche weg erstreckt, wobei die Brennkammerdachoberfläche die Dichtungsringgrenzoberfläche schneidet, um eine Brennkammeröffnung zu definieren,
das Verfahren umfassend:
Verwenden eines ersten Schneiders, um ein erstes Facettenpaar (181, 182) der Brennkammerdachoberfläche zu bearbeiten, wobei sich eine erste Facette des ersten Facettenpaars mindestens teilweise zwischen einem Paar Lufteinlassöffnungen in dem Brennkammerdach befindet, die sich auf einer Lufteinlassseite der Brennkammer befinden, und eine zweite Facette des ersten Facettenpaars mindestens teilweise zwischen einem Paar Abgasauslassöffnungen in dem Brennkammerdach befindet, die sich auf einer Abgasauslassseite der Brennkammer befinden;
Verwenden eines zweiten Schneiders, um ein zweites Facettenpaar (185a, 185b) der Brennkammerdachoberfläche zu bearbeiten, wobei sich das zweite Facettenpaar zwischen dem Paar Lufteinlassöffnungen und dem Paar Abgasauslassöffnungen befindet, derart, dass sich jede des zweiten Facettenpaars zwischen der Lufteinlassseite der Brennkammer und der Abgasauslassseite der Brennkammer erstreckt; und
Verwenden des zweiten Schneider, um ein drittes Facettenpaar (186a, 186b) der Brennkammerdachoberfläche zu bearbeiten, wobei sich eine erste des dritten Facettenpaars zwischen einer ersten der Lufteinlassöffnungen und einer ersten der Abgasauslassöffnungen befindet, und sich eine zweite des dritten Facettenpaars zwischen einer zweiten der Lufteinlassöffnungen und einer zweiten der Abgasauslassöffnungen befindet.

2. Verfahren nach Anspruch 1, wobei das erste Facettenpaar vor dem zweiten Facettenpaar bearbeitet wird.

3. Verfahren nach Anspruch 1 oder 2, wobei das zweite Facettenpaar vor dem dritten Facettenpaar bearbeitet wird.

4. Verfahren nach einem der vorstehenden Ansprüche, umfassend das Verwenden des zweiten Schneiders, um ein viertes Facettenpaar der Brennkammerdachoberfläche zu bearbeiten, wobei sich eine erste des vierten Facettenpaars zwischen der ersten der Lufteinlassöffnungen und der ersten der Abgasauslassöffnungen befindet, und sich eine zweite des vierten Facettenpaars zwischen der zweiten der Lufteinlassöffnungen und der zweiten der Abgasauslassöffnungen befindet.

5. Verfahren nach Anspruch 4, umfassend das Verwenden des zweiten Schneiders, um ein fünftes Facettenpaar der Brennkammerdachoberfläche zu bearbeiten, wobei sich eine erste des fünften Facettenpaars zwischen der ersten der Lufteinlassöffnungen und der ersten der Abgasauslassöffnungen befindet, und sich eine zweite des fünften Facettenpaars zwischen der zweiten der Lufteinlassöffnungen und der zweiten der Abgasauslassöffnungen befindet.

6. Verfahren nach Anspruch 5, umfassend das Verwenden eines dritten Schneiders, um ein sechstes Facettenpaar der Brennkammerdachoberfläche zu bearbeiten, wobei sich eine erste des sechsten Facettenpaars mindestens teilweise zwischen dem Paar Lufteinlassöffnungen befindet, und sich eine zweite des sechsten Facettenpaars mindestens teilweise zwischen dem Paar Abgasauslassöffnungen befindet, wobei jede des sechsten Facettenpaars die Dichtungsringgrenzoberfläche schneidet, um ein Paar gegenüberliegende Abschnitte der Brennkammeröffnung zu definieren.

7. Verfahren nach Anspruch 4, wobei das vierte Facettenpaar nach dem dritten Facettenpaar bearbeitet wird.

8. Verfahren nach Anspruch 5, wobei das fünfte Facettenpaar nach dem vierten Facettenpaar bearbeitet wird.

9. Verfahren nach Anspruch 6, wobei das sechste Facettenpaar nach dem fünften Facettenpaar bearbeitet wird.

10. Verfahren nach einem der vorstehenden Ansprüche, wobei das dritte Facettenpaar ein Paar flacher Oberflächen umfasst.

11. Verfahren nach Anspruch 10, wobei die erste des dritten Facettenpaars im Wesentlichen parallel zu der Ebene der ersten der Abgasauslassöffnungen ist, und die zweite des dritten Facettenpaars im Wesentlichen parallel zu der Ebene der zweiten der Abgasauslassöffnungen ist, optional wobei sich jede des dritten Facettenpaars zwischen gekrümmten Oberflächen befindet, die an die Lufteinlassöffnungen, beziehungsweise die Abgasauslassöffnungen angrenzen.

12. Verfahren nach einem der vorstehenden Ansprüche, wobei das zweite Facettenpaar gegenüberliegende gekrümmte Oberflächen umfasst, optional wobei der Schnittpunkt des ersten Facettenpaars und der Dichtungsringgrenzoberfläche ein zweites Paar gegenüberliegender Abschnitte der Brennkammeröffnung definieren, optional wobei der Schnittpunkt des sechsten Facettenpaars und der Dichtungsringgrenzoberfläche ein zweites Paar gegenüberliegender Abschnitte der Brennkammeröffnung definieren.

13. Zylinderkopf, umfassend eine Brennkammerdachoberfläche, die nach einem der Ansprüche 1 bis 12 bearbeitet ist.

14. Magerbenzinmotor, umfassend einen Zylinderkopf nach Anspruch 13.

15. Fahrzeug, umfassend einen Magerbenzinmotor nach Anspruch 14.

## Revendications

1. Procédé d'usinage d'une surface de toit de chambre à combustion dans une culasse pour un moteur à essence à mélange pauvre, dans lequel la culasse usinée comprend :
une surface d'interface de joint sensiblement plane ; et
une chambre à combustion s'étendant dans la culasse à l'écart de la surface d'interface de joint, dans lequel la surface de toit de chambre à combustion croise la surface d'interface de joint pour définir une ouverture de chambre à combustion,
le procédé comprenant :
l'utilisation d'une première fraise pour usiner une première paire de facettes (181, 182) de la surface de toit de chambre à combustion, dans lequel une première paire de facettes est située au moins partiellement entre une paire d'ouvertures d'entrée d'air dans le toit de chambre à combustion située du côté de l'entrée d'air de chambre à combustion, et une seconde paire de facettes est située au moins partiellement entre une paire d'ouvertures de sortie d'échappement dans le toit de chambre à combustion située du côté de sortie d'échappement de la chambre à combustion ;
l'utilisation d'une deuxième fraise pour usiner une deuxième paire de facettes (185a, 185b) de la surface du toit de chambre à combustion, dans lequel la deuxième paire de facettes est située entre la paire d'ouvertures d'entrée d'air et la paire d'ouvertures de sortie d'échappement de sorte que chacune de la deuxième paire de facettes s'étende entre le côté d'entrée d'air de la chambre à combustion et le côté de sortie d'échappement de la chambre à combustion ; et
l'utilisation de la deuxième fraise pour usiner une troisième paire de facettes (186a, 186b) de la surface de toit de chambre à combustion, dans lequel une première paire de facettes est située entre une première des ouvertures d'entrée d'air et une première des ouvertures de sortie d'échappement, et une deuxième paire de facettes est située entre une seconde des ouvertures d'entrée d'air et une seconde des ouvertures de sortie d'échappement.

2. Procédé selon la revendication 1, dans lequel la première paire de facettes est usinée avant la deuxième paire de facettes.

3. Procédé selon la revendication 1 ou la revendication 2, dans lequel la deuxième paire de facettes est usinée avant la troisième paire de facettes.

4. Procédé selon l'une quelconque revendication précédente, comprenant l'utilisation de la deuxième fraise pour usiner une quatrième paire de facettes de la surface de toit de chambre à combustion, dans lequel une première paire de facettes est située entre la première des ouvertures d'entrée d'air et la première des ouvertures de sortie d'échappement, et une deuxième paire de facettes est située entre la seconde des ouvertures d'entrée d'air et la seconde des ouvertures de sortie d'échappement.

5. Procédé selon la revendication 4, comprenant l'utilisation de la deuxième fraise pour usiner une cinquième paire de facettes de la surface de toit de chambre à combustion, dans lequel une première paire de facettes est située entre la première des ouvertures d'entrée d'air et la première des ouvertures de sortie d'échappement, et une deuxième paire de facettes est située entre la seconde des ouvertures d'entrée d'air et la seconde des ouvertures de sortie d'échappement.

6. Procédé selon la revendication 5, comprenant l'utilisation d'une troisième fraise pour usiner une sixième paire de facettes de la surface de toit de chambre à combustion, dans lequel une première paire de facettes est située au moins partiellement entre la paire d'ouvertures d'entrée d'air, et une deuxième paire de facettes est située au moins partiellement entre la paire d'ouvertures de sortie d'échappement, dans lequel chacune des sixièmes paires de facettes croise la surface d'interface de joint pour définir une paire de sections opposées de l'ouverture de chambre à combustion.

7. Procédé selon la revendication 4, dans lequel la quatrième paire de facettes est usinée après la troisième paire de facettes.

8. Procédé selon la revendication 5, dans lequel la cinquième paire de facettes est usinée après la quatrième paire de facettes.

9. Procédé selon la revendication 6, dans lequel la sixième paire de facettes est usinée après la cinquième paire de facettes.

10. Procédé selon l'une quelconque revendication précédente, dans lequel la troisième paire de facettes comprend une paire de surfaces planes.

11. Procédé selon la revendication 10, dans lequel la première de la troisième paire de facettes est sensiblement parallèle au plan de la première des ouvertures de sortie d'échappement, et la deuxième de la troisième paire de facettes est sensiblement parallèle au plan de la seconde des ouvertures de sortie d'échappement, éventuellement dans lequel chacune de la troisième paire de facettes est située entre des surfaces incurvées qui bordent respectivement les ouvertures d'entrée d'air et les ouvertures de sortie d'échappement.

12. Procédé selon l'une quelconque revendication précédente, dans lequel la deuxième paire de facettes comprend des surfaces courbées opposées, éventuellement dans lequel l'intersection de la première paire de facettes et la surface d'interface de joint définissent une seconde paire de sections opposées de l'ouverture de chambre à combustion, éventuellement dans lequel l'intersection de la sixième paire de facettes et la surface d'interface de joint définissent une seconde paire de sections opposées de l'ouverture de chambre à combustion.

13. Culasse comprenant une surface de toit de chambre à combustion usinée selon l'une quelconque des revendications 1 à 12.

14. Moteur à essence à mélange pauvre comprenant une culasse selon la revendication 13.

15. Véhicule comprenant un moteur à essence à mélange pauvre selon la revendication 14.
